# FASCICULE DE BREVET EUROPEEN

(11) **EP 2 385 932 B1**
(45) Date de publication et mention de la délivrance du brevet: **11.04.2018**
(21) Numéro de dépôt: 10706284.6
(22) Date de dépôt: 06.01.2010
(51) Int. Cl.: C03C 17/42, C03C 23/00, C04B 41/89

(54) **SUBSTRAT HYDROPHOBE COMPRENANT UN PRIMAGE DU TYPE OXYCARBURE DE SILICIUM ACTIVE PAR PLASMA, PROCéDé DE FABRICATION ET APPLICATION DE CE SUBSTRAT**
HYDROPHOBES SUBSTRAT MIT PLASMAAKTIVIERTER SILICIUMOXIDCARBID-PRIMERSCHICHT, VERFAHREN ZUR HERSTELLUNG UND VERWENDUNG DIESES SUBSTRATS
HYDROPHOBIC SUBSTRATE INCLUDING A PLASMA-ACTIVATED SILICON OXYCARBIDE PRIMER, PROCESS OF MAKING AND USE OF THIS SUBSTRATE

(30) Priorité: 09.01.2009 FR 0950098
(43) Date de publication de la demande: 16.11.2011
(73) Titulaire: Saint-Gobain Glass France, 92400 Courbevoie (FR)
(72) Inventeur: THOUMAZET, Claire, F-75002 Paris (FR); NGHIEM, Bernard, F-60190 Arsy (FR); CORDIER, Bruno, F-77860 Quincy-Voisins (FR)
(74) Mandataire: Saint-Gobain Recherche
(86) Numéro de dépôt international: PCT/FR2010/050012
(87) Numéro de publication internationale: WO 2010/079299

(56) Documents cités:
- FR-A- 2 866 643
- US-A1- 2008 038 483

## Description

La présente invention concerne le traitement hydrophobe d'un substrat, notamment constitué d'un matériau verrier, d'une céramique, vitrocéramique etc.

Les substrats selon l'invention sont de préférence des vitrages en verre. Ils sont utilisés, en particulier, dans le domaine aéronautique, ferroviaire ou automobile. Ils peuvent aussi être utilisés dans le domaine du bâtiment ou dans le domaine de l'aménagement intérieur comme, par exemple, des panneaux décoratifs, pour l'ameublement, l'électroménager (portes de réfrigérateurs, de fours, vitrines) etc.

Ce type de traitement vise de manière connue à donner au substrat le caractère de non-mouillabilité, encore appelé anti-pluie.

Par mouillabilité, on désigne la propriété selon laquelle des liquides polaires ou non polaires adhèrent sur le substrat et forment un film gênant, ainsi que la tendance d'un substrat à retenir les poussières ou salissures de toutes natures, traces de doigts, insectes, etc.

La présence d'eau, souvent chargée en salissures, est gênante en particulier pour un substrat transparent du type vitrage, notamment utilisé dans le domaine du transport. La propriété de non-mouillabilité d'un substrat, plus communément désignée hydrophobie, est d'autant plus élevée que les angles de contact entre un liquide hydrophile et ce substrat sont élevés, par exemple d'au moins 90° pour l'eau. Le liquide a alors tendance à s'écouler aisément, sous forme de gouttes, sur le substrat, par simple gravité si le substrat est incliné, ou sous l'effet de forces aérodynamiques dans le cas d'un véhicule en mouvement.

L'intérêt d'incorporer sur le substrat notamment verrier un revêtement hydrophobe de l'invention pour ce type de produits est double. Tout d'abord, il permet l'écoulement de gouttes d'eau sur des surfaces verticales ou inclinées, éventuellement sous l'effet de forces aérodynamiques par exemple dans le cas d'un véhicule en mouvement. De plus, ces gouttes qui s'écoulent englobent des salissures et les entraînent. La visibilité à travers le vitrage est améliorée à un degré tel que l'on peut se dispenser dans certains cas de dispositifs de nettoyage (lave-vitres, essuie-glaces).
Des agents connus pour conférer cette propriété d'hydrophobie et utilisable sous forme d'une couche de revêtement sur un vitrage (substrat) sont par exemple des alkylsilanes fluorés tels que décrits dans les demandes de brevets EP 0 492 417, EP 0 492 545 et EP 0 672 779 ou encore WO2007012779. Selon ces documents, cette couche peut être obtenue en appliquant sur la surface d'un substrat une solution contenant des organosilanes fluorés dans un solvant organique aqueux ou non aqueux.

Des agents hydrophobes courants sont, par exemple, des alkylsilanes dont le groupe alkyle comporte au moins une extrémité perfluorée, c'est-à-dire consistant en un groupement F₃C-(CF₂)ₙ-, dans lequel n est un nombre entier positif ou nul.

L'un des problèmes se posant avec le plus d'acuité dans le domaine de l'invention est tout d'abord celui de l'abrasion du revêtement hydrophobe. Cette abrasion se produit plus ou moins au cours des opérations de nettoyage du substrat, périodiquement indispensables en particulier pour restaurer une vision satisfaisante à travers un substrat transparent. On cherche ainsi depuis longtemps à minimiser l'élimination progressive des revêtements hydrophobes de types précités, qui se produit notamment sous l'action d'essuie-glaces dans le cas d'un pare-brise automobile. Une telle élimination peut en outre et additionnellement résulter d'une dégradation par le rayonnement ultraviolet.

Il est par exemple connu de la demande EP 0 492 545 A2 précitée d'accroître l'adhésion du revêtement hydrophobe en soumettant le substrat à un traitement de primage avant d'appliquer le revêtement. Ce traitement consiste à former une fine couche intermédiaire à partir d'agents dits de primage ou primaires, qui sont le plus souvent des composés du silicium ayant au moins deux fonctions hydrolysables. De façon bien connue, une fonction hydrolysable permet la liaison chimique au substrat par un atome d'oxygène lié à l'atome de silicium ; la seconde fonction hydrolysable permettant la fixation de l'agent hydrophobe. Ainsi on utilise le plus souvent, pour obtenir une couche de primaire en silice SiO₂ des précurseurs connus d'agent de primage. Sont notamment mentionnés dans la demande EP 0 492 545 A2, en tant qu'agents de primage, les composés SiCl₄, SiHCl₃, SiH₂Cl₂ et Cl-(SiCl₂O)ₙSiCl₃, n étant un entier compris entre 1 et 4.

Cependant, si de telles sous-couches permettent d'obtenir des performances en conformité avec la grande majorité des spécifications UV elles restent encore insuffisantes en termes de résistance mécanique et plus particulièrement de résistance à l'abrasion, notamment selon les normes imposées à l'heure actuelle par les constructeurs automobiles. En outre, elles ne présentent en général pas une inertie chimique suffisante leur permettant typiquement de satisfaire des critères de résistance hydrolytique, notamment en vue d'une utilisation en extérieur.

En particulier, les essais menés par la demanderesse ont démontré que dans la majorité des cas, de tels revêtements remplissaient difficilement le cahier des charges imposé en la matière par les constructeurs automobiles et mesuré par exemple par les tests Opel® ou Toyota® pour la résistance à l'abrasion et par le test de résistance au Brouillard Salin Neutre (BSN) selon la norme NF ISO 9227 pour la résistance hydrolytique.

Par exemple, les revêtements décrits dans les demandes EP 944 687 et EP 1 102 825, dont les performances de résistance aux UV et de résistance mécanique sont apparues satisfaisantes, présentent des performances moyennes de résistance à la corrosion saline, telles que mesurées par le test BSN. Cette insuffisance pourrait limiter leur développement, en particulier sur le marché asiatique où les normes sont les plus sévères dans ce domaine.

Afin d'améliorer encore les propriétés de résistance mécanique du revêtement hydrophobe, il a déjà été proposé, dans la demande WO2005/084943 d'activer une couche de primage SiO₂ par un plasma réactif fluoré, par exemple un plasma à base de SF₆ ou C₂F₆ éventuellement en mélange avec de l'oxygène, dans des conditions permettant d'effectuer une gravure de la couche SiO₂. Dans cette demande, il est notamment décrit qu'une telle gravure permet d'améliorer sensiblement la résistance à l'abrasion du substrat hydrophobe obtenu après dépôt de l'alkylsilane à extrémité perfluorée, sans détériorer ses performances hydrolytiques.

La publication US 2008 038483 décrit une méthode pour améliorer l'adhésion entre un revêtement antireflet et un revêtement hydrophobe.

La présente invention a ainsi pour principal objet des substrats revêtus d'un revêtement hydrophobe, ainsi que leur procédé d'obtention, dont les propriétés sont améliorées. Plus particulièrement les substrats hydrophobes selon l'invention sont munis de revêtements présentant des performances améliorées de résistance à l'abrasion, jamais encore observées par rapport à celles des revêtements connus à l'heure actuelle. En outre, selon un autre aspect de la présente invention, les substrats hydrophobes selon l'invention présentent une résistance hydrolytique particulièrement élevée.

De telles performances leur permettent typiquement de remplir plus efficacement les cahiers des charges imposés à l'heure actuelle par l'industrie automobile ou aéronautique, à la fois en termes de résistance à l'abrasion, aux UV et à la corrosion saline.

A cette fin, selon un premier aspect, l'invention a pour objet un procédé d'obtention d'un revêtement hydrophobe sur un substrat constitué d'un matériau verrier, d'une céramique, ou d'une vitrocéramique, ledit procédé se caractérisant en ce qu'il comprend :
a) une première étape consistant à appliquer sur ledit substrat une première couche de primage SiOₓC_{y} (souvent simplifiée sous la forme SiOC dans la présente description), c'est-à-dire constituée essentiellement, voire exclusivement, de SiOₓC_{y}, ledit primage présentant une rugosité de surface RMS supérieure à 4 nm,
b) une étape d'activation de ladite couche de primage SiOₓC_{y} par un plasma d'un gaz choisi parmi les gaz nobles Ar, He, les gaz N₂, O₂ ou H₂O ou par un plasma d'un mélange d'au moins deux de ces gaz, de préférence dans des conditions ne modifiant pas ou sensiblement pas sa rugosité de surface,
c) une deuxième étape de dépôt sur ladite première couche d'un revêtement hydrophobe comprenant typiquement au moins un composé fluoré, de préférence un alkylsilane fluoré.

Selon un mode préféré de l'invention, l'étape d'activation de ladite couche de primage SiOₓC_{y} est obtenue au moyen d'un plasma d'un mélange de gaz contenant H₂O et au moins un gaz choisi parmi Ar, He ou N₂, le pourcentage volumique de H₂O dans le mélange étant de préférence inférieur ou égal à environ 3%.

Typiquement, la couche de primage SiOₓC_{y} est déposée par CVD thermique dans des conditions permettant d'obtenir une rugosité de surface RMS comprise entre 4 et 15 nm, notamment entre 6 et 15 nm.

Selon un mode possible, l'étape de dépôt du revêtement hydrophobe est mise en oeuvre à partir d'une solution obtenue à partir d'un perfluoroalkylsilane de formule :

F₃C-(CF₂)ₘ-(CH₂)ₙ-Si(X)₃₋ₚ(R)ₚ

dans laquelle :
- m = 0 à 15, de préférence 5 à 9;
- n = 1 à 5, de préférence n = 2
- p = 0, 1 ou 2, de préférence 0 ou 1, de manière très préférée 0;
- R est un groupe alkyle ou un atome d'hydrogène ; et
- X est un groupement hydrolysable tel qu'un groupement halogénure ou un groupement alkoxy.

Selon un autre mode, l'étape de dépôt du revêtement hydrophobe est mise en oeuvre à partir d'une solution obtenue à partir d'un perfluoroalkylsilane du type perfluoropolyéthersilane.

On décrit ci-après plus en détail certains modes de réalisation préférés de l'invention, par référence aux trois étapes principales du procédé décrit précédemment :

### 1°) Conditions du dépôt CVD et caractérisation de la couche SiOC, notamment sa rugosité :

La couche de primage selon l'invention répond à la formulation SiOₓC_{y} (qu'on désigne également par commodité dans la présente description par la formulation SiOC, sans préjuger du taux réel d'oxygène et de carbone). Elle comprend donc avantageusement Si, O, C et éventuellement une partie mineure d'azote. Elle peut comprendre aussi des éléments minoritaires par rapport au silicium, par exemple des métaux comme Al, Zn ou Zr. Ce revêtement peut notamment être déposé par pyrolyse, notamment par pyrolyse en phase gazeuse (CVD). Cette dernière technique permet d'obtenir des couches fines de SiOC assez aisément, notamment soit par dépôt directement sur le ruban de verre float, soit en reprise dans le cas de substrats verriers. Le précurseur de silicium utilisé peut se présenter sous la forme d'un silane de type SiH₄, d'un organo-silane, du type RSiX₃ avec X un halogénure du type chlore et R un alkyl (linéaire ou ramifié). Il peut s'agir d'organo-silane du type R_{y}SiX_{4-y}, avec les mêmes conventions concernant R et X, ou d'un composé appartenant à la famille des éthoxysilanes. D'autres précurseurs/gaz peuvent être ajoutés au(x) précurseur(s) de silicium, comme l'éthylène et un agent oxydant (O₂, H₂O, H₂O₂, CO₂, ...).

Le primage SiOC selon l'invention a de préférence une épaisseur d'au moins 10 nm, notamment une épaisseur comprise entre 10 et 200 nm, par exemple entre 30 et 120 nm.

Selon l'invention, les conditions de dépôt, notamment par CVD, sont ajustées pour que la couche de primage en SiOC présente une certaine rugosité. Ladite rugosité peut notamment prendre la forme d'irrégularités à la surface de la couche de primage, par exemple des protubérances et/ou des creux de taille nanométrique, notamment sous la forme de bosses.

Il peut plus particulièrement s'agir d'irrégularités dont au moins une partie ne soient pas jointives : la face extérieure de la couche de primage SiOC présente avantageusement selon l'invention un profil relativement lisse d'où émergent des protubérances, notamment sous forme de bosses, qui peuvent se chevaucher, être jointes, mais dont au moins certaines sont disjointes. Selon l'invention, il est possible d'atteindre une telle structuration de surface en jouant notamment sur les paramètres de dépôt de la couche SiOC lors du procédé de CVD-pyrolyse et notamment en jouant sur les ratios gaz oxydant/SiH₄ et éthylène/SiH₄. Selon l'invention le ratio gaz oxydant/SiH₄ est de référence compris entre environ 3 et environ 70 et le ratio éthylène/SiH₄ est compris entre environ 0,9 et environ 6.

Selon la présente invention, ces irrégularités ont des tailles variables, avec par exemple une répartition de diamètre compris entre 5 et 300 nm, notamment entre 50 et 100 nm. On comprend ici le terme «diamètre » au sens large, en assimilant ces irrégularités, à des demi-sphères pleines (protubérances) ou vides (creux). Il va de soi que c'est une taille moyennée, et que l'on inclut des protubérances/creux de forme plus aléatoire, plus allongée par exemple.
Ces irrégularités peuvent aussi présenter une hauteur (pour les protubérances) ou une profondeur (pour les creux) comprise entre 5 et 100 nm, notamment entre 40 et 60 nm, voire entre 10 et 50 nm. C'est là une indication de la valeur maximale pour chaque protubérance/creux dont on veut évaluer la taille. Une façon de mesurer ces dimensions peut consister par exemple en des mesures basées sur des photos prises par microscopie à effet de balayage M.E.B. La répartition de ces irrégularités par unité de surface au substrat. On peut ainsi avoir un nombre de protubérances/creux pour ce premier revêtement évalué au moins à 10 par µm² de substrat recouvert, notamment au moins à 20 par µm² de substrat recouvert.

Typiquement, la rugosité RMS, exprimée en nm, des irrégularités à la surface est supérieure à 4 mm. De préférence, cette rugosité est inférieure à 30 nm, voire inférieure à 25 ou même 20 nm. De préférence cette rugosité est supérieure à 5 nm, voire supérieure à 6 nm. On peut notamment avoir une rugosité RMS pour cette première couche comprise entre 4 et 15 nm.

### 2°) Conditions du plasma d'activation :

Selon l'invention la couche de primage est traitée par un gaz activé sous la forme d'un plasma. Cette étape peut être réalisée dans différentes installations sous vide ou à pression atmosphérique, on peut par exemple utiliser un réacteur RF capacitif à plans parallèles. Le traitement conduit à une modification chimique de la couche qui n'altère pas ou peu sa morphologie. Le gaz utilisé est pris parmi N₂, O₂ ou H₂O ou un mélange de ces gaz, en particulier par un mélange N₂+H₂O obtenu en faisant barboter un flux d'azote dans un bulleur rempli d'eau déionisée à température ambiante. Le mélange N₂+H₂O utilisé est chargé jusqu'à 3% en volume d'eau, la pression de travail est régulée entre 75 et 300 mtorr, la puissance entre 150 et 5000W et le temps d'activation de préférence compris entre environ 1 minute et environ 15 minutes, typiquement entre 5 et 10 minutes.

### 3°) Conditions du dépôt de la couche hydrophobe :

Selon l'invention, la couche hydrophobe comprenant un alkylsilane fluoré peut être déposée par toute technique connue à ce jour, sans que le choix d'une technique de dépôt puisse être considéré comme préférée au sens de la présente invention.

Le dépôt de la couche hydrophobe peut notamment, sans y être restreint, être effectué par des techniques de chiffonnage bien connues dans le domaine et ou encore par des techniques de dépôt par plasma atmosphérique ou sous vide, tel que décrit dans les documents cités précédemment.

L'invention se rapporte également à un substrat verrier, céramique, vitrocéramique muni d'un revêtement hydrophobe susceptible d'être obtenu par la mise en oeuvre d'un procédé selon l'une des réalisations précédentes et comprenant :
- une couche de primage SiOₓC_{y}, c'est-à-dire constitué essentiellement, voire exclusivement d'oxycarbure de silicium, dont la surface présente une rugosité de surface RMS supérieure à 4 nm et a été activée par un plasma d'un gaz choisi parmi les gaz nobles Ar, He, les gaz N₂, O₂ ou H₂O ou par un plasma d'un mélange d'au moins deux de ces gaz, de préférence dans des conditions ne modifiant pas ou sensiblement pas sa rugosité de surface,
- une couche de revêtement hydrophobe sur ladite couche de primage, comprenant un composé fluoré, de préférence un alkylsilane fluoré, notamment un alkylsilane à extrémité perfluorée hydrophobe.

De préférence, le substrat est obtenu par la mise en oeuvre d'une étape d'activation de ladite couche de primage SiOₓC_{y} est obtenue au moyen d'un plasma d'un mélange de gaz contenant H₂O et au moins un gaz choisi parmi Ar, He ou N₂, le pourcentage volumique de H₂O dans le mélange étant de préférence inférieur à 3%.

Par exemple, l'épaisseur de la couche de primage SiOₓC_{y} est comprise entre 10 et 200 nm.

Typiquement, la rugosité RMS de la couche de primage SiOₓC_{y} est inférieure à 30 nm, voire inférieure à 25 ou même 20 nm. De préférence cette rugosité est supérieure à 5 nm, voire supérieure à 6 nm. Elle est typiquement comprise entre 4 et 15 nm, notamment entre 6 et 15 nm. La rugosité RMS de la couche de primage SiOₓC_{y} est généralement constituée par des irrégularités à la surface de la couche de primage, par exemple des protubérances et/ou des creux, notamment sous la forme de bosses, dont la hauteur est comprise entre 5 et 100 nm et le nombre au moins de 10 par µm² de substrat recouvert.

Sur le substrat verrier selon l'invention, ledit alkylsilane à extrémité perfluorée peut comprendre un groupement du type représenté par la formule générale:

F₃C-(CF₂)ₘ-(CH₂)ₙ-Si

avec :
- m = 0 à 15, de préférence 5 à 9;
- n = 1 à 5, de préférence n = 2.
Selon un mode alternatif, ledit alkylsilane à extrémité perfluorée comprend un groupement du type perfluroropolyéther, qui peut être du type représenté par la formule générale: 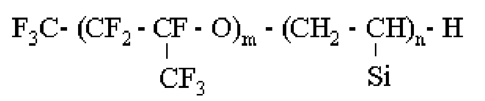 ou par la formule générale : 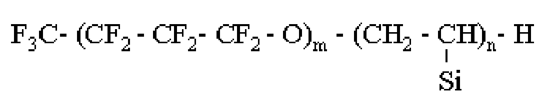 dans lesquelles
- m = 2 à 30
- n = 1 à 3, de préférence n = 1.

Typiquement, l'épaisseur de la couche de revêtement hydrophobe sur le primage est comprise entre 1 et 10 nm, de préférence entre 1 et 5 nm.

L'invention se rapporte également à un vitrage monolithique, feuilleté ou multiple constitué par ou incorporant le substrat verrier précédemment décrit ainsi qu'à l'utilisation dudit substrat verrier en tant que vitrage de véhicule de transport ou pour le bâtiment.
Il est précisé que l'on entend :
Par " vitrage monolithique ", un vitrage constitué d'une unique feuille de verre;
Par " vitrage feuilleté ", un empilement de plusieurs feuilles solidaires les unes des autres, par exemple de feuilles de verre ou de matière plastique fixées les unes aux autres au moyen de couches adhésives de polyvinylbutyral, polyuréthane... ; et
Par " vitrage multiple ", un assemblage de feuilles disjointes, c'est-à-dire notamment séparées les unes des autres par des couches d'air.

On peut notamment citer, sans que la liste suivante soit exhaustive, les applications suivant pour un substrat hydrophobe selon l'invention :
- en tant que vitrage pour véhicule de transport (vitres latérales automobiles, pare-brise aviation ou automobile) ou pour le bâtiment ;
- en tant que plaque de cuisson vitrocéramique, porte de four ;
- en tant qu'élément de mobilier urbain, notamment comme élément d'abribus ; et
- en tant qu'élément mobilier, notamment comme miroir, tablette de rangement, tablette pour appareil électroménager tel que réfrigérateur, élément de cabine de douche, cloison ;
- en tant qu'écran, notamment écran de télévision, écran tactile, écran plasma.

Les exemples suivants servent à illustrer l'invention sans toutefois en limiter la portée, sous aucun des aspects décrits. Dans ces exemples, sauf indication contraire, tous les pourcentages sont donnés en masse.

### EXEMPLES

Tel que reporté dans les exemples qui suivent, différents échantillons, certains conformes à l'invention et d'autres donnés à titre purement comparatifs ont été préparés pour caractériser l'effet technique et les avantages liés à la mise en oeuvre de la présente invention.

Dans tous les exemples, on a respecté le même protocole expérimental, décrit ci-après (sauf exceptions marquées par des astérisques dans les tableaux 1 et 2 qui suivent):
a) préparation d'un substrat verrier muni d'une couche de primage du type SiOC :
   Une couche de primage en oxycarbure de silicium (SiOC) est d'abord déposée par CVD thermique sur un substrat verrier avec une épaisseur de 4 mm, commercialisé par la société Saint Gobain Glass France sous la référence SGG Planilux®.

Sur une première série d'échantillons, le dépôt CVD d'oxycarbure de silicium SiOC est réalisé à partir de précurseurs sous la forme d'un mélange de SiH₄, d'éthylène et de CO₂ en dilution dans un gaz vecteur d'azote dans les proportions respectives en pourcentage volumique de 0,41 / 2,74 / 6,85 / 90,1, à l'aide d'une buse disposée au-dessus et transversalement sur le verre, le verre étant préalablement porté à une température d'environ 600°C.

La couche SiOC obtenue présente une épaisseur d'environ 60 nm et présente en analyse MEB une morphologie de demi-sphères pleines en forme de bosses. Les protubérances ont une hauteur maximale d'environ 40 nm pour une concentration de 180 par µm². La rugosité RMS caractérisée par AFM (Microscopie à Force Atomique) pour cette couche de SiOC est d'environ 9 nm.

Sur une deuxième série d'échantillons, on a effectué le dépôt d'une sous-couche de SiO₂ soit par la même technique CVD, soit par une technique de dépôt magnétron, selon le protocole expérimental décrit dans l'exemple 2-IV de la demande de brevet WO2005/084943, soit encore par dépôt sol-gel conformément à l'enseignement du brevet EP 799 873 B1.

Certaines sous-couches obtenues après l'étape a) ont été ensuite activées par différents plasmas sous vide à température ambiante dans un réacteur PECVD (cf. tableau 1 ci-dessous).
b) activation plasma :
   Certains des substrats préparés à l'étape a), munis des couches d'oxycarbure de silicium (première série d'échantillons) ou de silice (deuxième série d'échantillons) sont ensuite soumis à une activation par différents plasmas.

Pour ce faire, le substrat muni de sa couche de primage est placé dans une enceinte d'un réacteur PECVD basse pression (déposition en phase gazeuse par procédé chimique, souvent appelé dans la technique selon le terme anglais Plasma Enhanced Chemical Vapour Déposition). On réalise dans un premier temps un vide résiduel de l'enceinte au moins égal à 5 mPa (5.10⁻⁵ mbar) avant d'introduire le gaz permettant l'activation. Le gaz ou le mélange de gaz utilisé pour le traitement de surface de l'oxycarbure de silicium ou de la silice est introduit dans l'enceinte à des débits variant entre 20 sccm et 200 sccm, jusqu'à ce que la pression totale dans le réacteur soit régulée entre 9,99 et 26,66 Pa (75-200 mTorr).

A l'équilibre, on allume un plasma du gaz introduit en polarisant le diffuseur de gaz avec une puissance radiofréquence (13, 56 MHz) moyenne de 200 W, pendant une durée de 1 à 5 mn à température ambiante.
(c) Application de silane fluoré
   A l'issue de l'étape b) (ou de l'étape a) en l'absence d'activation), une solution de perfluorodécyltriéthoxysilane est à son tour déposée sur le substrat muni de son primaire par chiffonnage. Dans les exemples, le dépôt des différentes couches est effectué par la technique bien connue du chiffonnage, dans laquelle le matériau ou son précurseur est déposé par l'intermédiaire d'un chiffon imbibé. Bien entendu, on ne sortirait cependant pas du cadre de l'invention si le dépôt était mis en oeuvre par tout autre technique connue à cette fin dans le domaine, en particulier par pulvérisation, qui permet par ailleurs un meilleur contrôle de l'épaisseur des couches, par centrifugation, selon des procédés connus dans le métier sous le terme anglais spin-coating, par trempage (procédés souvent appelés dip-coating) ou encore par arrosage (procédés souvent appelés flow-coating).
   Plus précisément, les échantillons sont chiffonnés avec une composition élaborée 2 heures avant leur application de la manière suivante (les pourcentages sont en poids) : On mélange 90% de propanol-2 et 10% de HCl 0,3 N dans l'eau. On ajoute une proportion, rapportée aux deux constituants précités, de 2% du composé de formule C₈F₁₇(CH₂)₂Si (OEt)₃ (Et = éthyle). Après 15 minutes d'attente à température ambiante, l'excédent de fluorosilane est éliminé par un nettoyage à l'isopropanol. L'épaisseur de la couche obtenue est d'environ 4 nm.

L'ensemble des exemples réalisés, ainsi que les différentes conditions expérimentales propres à chacun des exemples réalisés, sont réunis dans le tableau 1 qui suit :

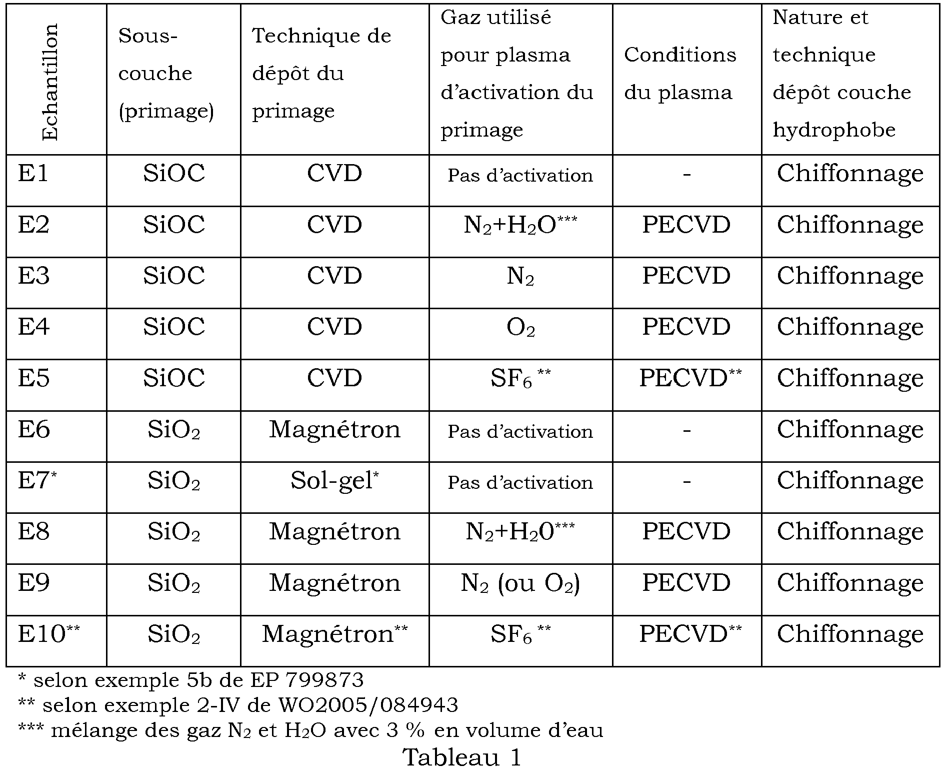

Les échantillons E2, E3 et E4 décrits dans le tableau 1 sont conformes à l'invention. L'analyse par AFM (microscope à force atomique) de la rugosité de la sous couche SiOC montre que la morphologie de la surface du primage n'est pas affectée par le traitement par le plasma d'activation N₂+H₂O, N₂ ou O₂, la rugosité RMS mesurée restant d'environ 9 nm pour les trois échantillons.
Les échantillons E1 et E5 à E10 sont donnés à titre comparatif :
Le primage déposé sur l'échantillon E1 n'a pas été activé par plasma.
Le primage déposé sur l'échantillon E5 a été activé par un plasma fluoré selon l'enseignement de la demande WO2005/084943.
Les échantillons E6 à E10, non conformes à l'invention, illustrent des configurations classiques d'obtention des primages actuels à base de silice.

On évalue les échantillons préparés tel que précédemment décrit selon les critères suivants :
1°) La mesure de l'angle de contact de l'eau initial, qui fournit une indication de référence du caractère hydrophobe du substrat greffé.
2°) La résistance à l'abrasion, obtenue par la mesure de l'angle de contact résiduel de l'eau sur l'échantillon après que le revêtement hydrophobe greffé ait subi une abrasion suivant deux tests différents:
   a) le test de friction Opel®, mené sur les échantillons avec un feutre de dureté H1, une charge de 0,4 kg/cm² sur une surface de 1,5 cm², avec une vitesse de translation de 50 cycles/minute et une vitesse de rotation de 6 tours/minute. Un échantillon est jugé satisfaisant au test si l'angle de contact reste supérieur à 80° après 15000 cycles ;
   b) le test de friction Toyota®, pratiqué selon la norme TSR7503G, une charge de 0,3 kg/cm² sur une surface de 4 cm² avec une vitesse de translation de 40 cycles/minute et en utilisant un dispositif fabriqué par la société Daiei Kagaku Seiki. Un échantillon est jugé satisfaisant au test si l'angle de contact reste supérieur à 80°, après 9000 cycles.
3°) la résistance au rayonnement UV-A, mesurée par des tests d'illumination en continu des échantillons par une lampe au Xénon émettant un rayonnement UV dont l'éclairement intégré entre 300 et 400 nm est de 60 W/m². Un échantillon est jugé satisfaisant au test si l'angle de contact reste supérieur à 80° après 2000 heures d'exposition.

Les résultats obtenus pour les échantillons préparés conformément aux échantillons E1 à E10 sont reportés dans le tableau 2 :

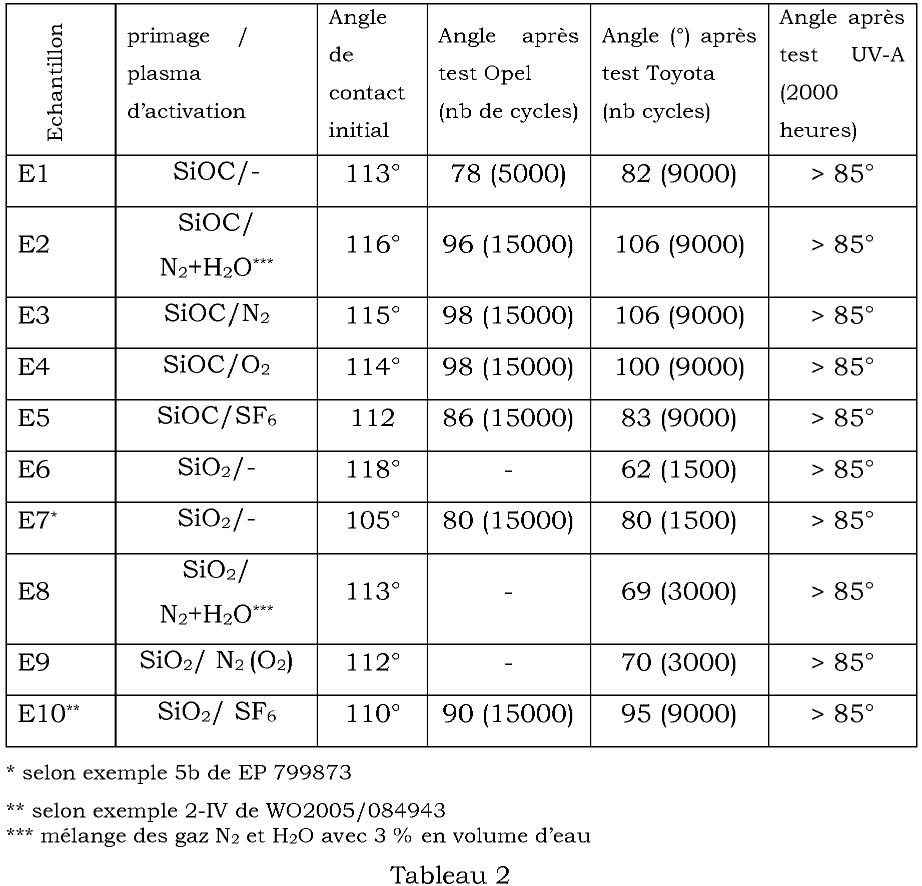

La comparaison des données reportées dans le tableau 2 montre que la présence d'une sous-couche de primage SiOC activée par un plasma N₂+H₂O N₂ ou O₂, conforme à l'invention, conduit à des propriétés anti-pluie initiales de la surface traitée sensiblement conformes à celles obtenues avec les meilleurs primages de l'art antérieur.

Les propriétés de résistance aux UV des substrats hydrophobes selon l'invention sont conformes aux normes actuelles.

La comparaison des données rassemblées dans le tableau 2 montre également que les propriétés de résistance des échantillons E2 à E4, conformes à l'invention, présentent une résistance à l'abrasion jamais encore observée jusqu'ici. Ainsi les résultats obtenus pour les échantillons E2 à E4 sont significativement meilleurs que ceux de tous les exemples comparatifs que ce soit pour le test Opel® ou le test Toyota®.

Dans une étape supplémentaire on a cherché à mesurer les propriétés de résistance hydrolytique des substrats munis du revêtement hydrophobe selon l'invention.

Les propriétés de résistance hydrolytique des substrats hydrophobes selon l'invention ont été mesurées de manière classique par le test de résistance à la corrosion saline, souvent appelé dans le domaine test BSN (Brouillard Salin Neutre) tel que décrit dans la norme NF ISO 9227. Le test consiste en une pulvérisation de fines gouttelettes d'eau saline (solution NaCl à 50g/l de pH = 7) à une température de 35°C sur les échantillons à mesurer. Les échantillons sont inclinés à 20° par rapport à la verticale. La norme la plus sévère en vigueur à l'heure actuelle pour une application sur des vitres latérales automobiles exige un angle de contact de l'eau supérieur à 70° après 300 heures de test.
L'échantillon E3, comprenant un revêtement hydrophobe selon l'invention (activation par plasma N₂), montre une résistance à la corrosion saline, mesurée par le test BSN, tout à fait satisfaisante dans l'application souhaitée. L'angle de contact mesuré après 824 heures de test BSN est encore de 94°. Il en est de même pour l'échantillon E4. L'échantillon E2 comprenant le revêtement hydrophobe selon l'invention et dont la sous couche en oxycarbure de silicium a été activée cette fois par un plasma d'un mélange des gaz N₂ et H₂O, montre une résistance à la corrosion saline, mesurée par le test BSN, tout particulièrement élevée. L'angle de contact mesuré après 824 heures de test BSN, est ainsi encore supérieur à 100°, ce qui est tout à fait remarquable.

On a également cherché à évaluer les propriétés des revêtements obtenus en fonction de la rugosité RMS de la sous-couche en SiOC.

En particulier, lors du dépôt CVD sur le substrat verrier de l'oxycarbure de silicium SiOC, on fait varier dans le mélange initial les pourcentages volumiques des différents précurseurs SiH₄, d'éthylène, de CO₂ et du gaz vecteur d'azote dans les proportions suivantes, en pourcentages volumiques dans le mélange: SiH₄: 0,1-1%, éthylène : 0,5-4,0%, CO₂ : 2-30%, N₂ : 70-95%.

On produit ainsi, sur le substrat, différentes couches de SiOC dont la rugosité RMS varie entre 0,4 nm et 15,8 nm. Les couches ainsi obtenues ont ensuite toutes été activées selon le même protocole que celui utilisé pour l'obtention de l'échantillon E2, notamment par un plasma comprenant un mélange des gaz N₂ et H₂O avec 3% en volume d'eau dans les conditions décrites précédemment dans l'étape b). Puis, le silane fluoré est appliqué sur les différents substrats, conformément au protocole décrit dans l'étape c).

La résistance à l'abrasion des substrats hydrophobes ainsi obtenus a été mesurée par le test Opel (15 000 cycles). Les résultats sont donnés dans le tableau 3 qui suit :

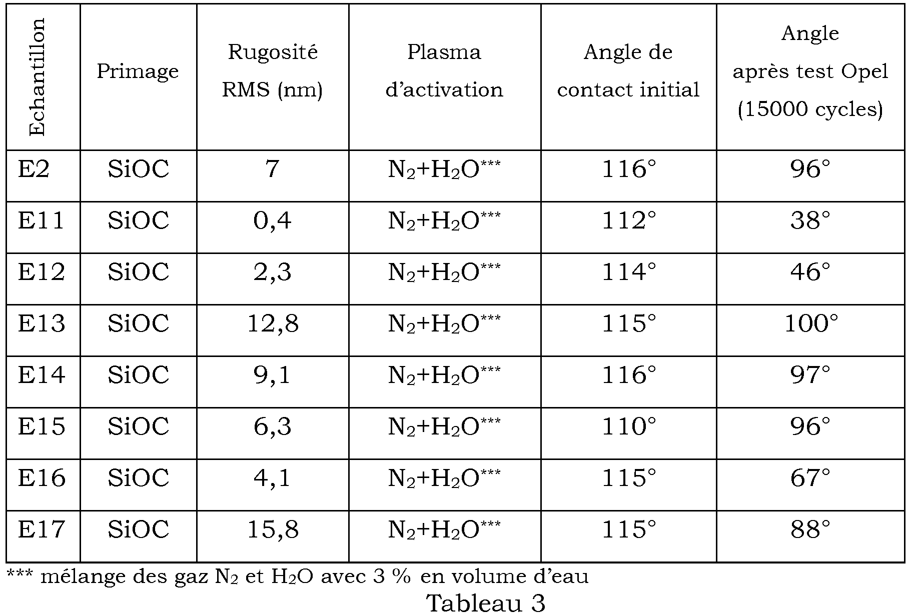

On voit par la comparaison des données rassemblées dans le tableau 3 que les propriétés de résistance à l'abrasion des échantillons E11 et E12, dont la rugosité RMS est trop faible au sens de la présente invention, sont insuffisantes. Les échantillons E2 et E13 à E15, dont les rugosités RMS sont comprises entre 6 et 15 nm, présentent les meilleures propriétés de résistance à l'abrasion.

Les exemples qui précèdent montrent que des améliorations extrêmement significatives des propriétés de résistance à l'abrasion des substrats hydrophobes peuvent être obtenues selon l'invention par le quadruple choix :
- de la nature de la sous couche (SiOC),
- de sa rugosité,
- de l'application d'un traitement plasma d'activation sur ladite sous-couche et
- de la nature dudit traitement plasma.

## Revendications

1. Procédé d'obtention d'un revêtement hydrophobe sur un substrat constitué d'un matériau verrier, d'une céramique, ou d'une vitrocéramique, ledit procédé **se caractérisant en ce qu'**il comprend :
a) une première étape de dépôt consistant à appliquer sur ledit substrat une première couche de primage en oxycarbure de silicium SiOₓC_{y}, ledit primage présentant une rugosité de surface RMS supérieure à 4 nm,
b) une étape d'activation de ladite couche de primage SiOₓC_{y} par un plasma d'un gaz choisi parmi les gaz nobles Ar, He, les gaz N₂, O₂ ou H₂O ou par un plasma d'un mélange d'au moins deux de ces gaz, de préférence dans des conditions ne modifiant pas ou sensiblement pas sa rugosité de surface,
c) une deuxième étape de dépôt sur ladite première couche d'un revêtement hydrophobe comprenant au moins un composé fluoré, de préférence un alkylsilane fluoré.

2. Procédé selon la revendication 1, dans lequel l'étape d'activation de ladite couche de primage SiOₓC_{y} est obtenue au moyen d'un plasma d'un mélange de gaz contenant H₂O et au moins un gaz choisi parmi Ar, He ou N₂, le pourcentage volumique de H₂O dans le mélange étant de préférence inférieur ou égal à environ 3%.

3. Procédé selon l'une des revendications 1 ou 2, dans lequel la couche de primage SiOₓC_{y} est déposée par CVD thermique dans des conditions permettant d'obtenir une rugosité de surface RMS comprise entre 4 et 15 nm, notamment entre 6 et 15 nm.

4. Procédé selon l'une des revendications précédentes, **caractérisé en ce que** l'étape de dépôt du revêtement hydrophobe est mise en oeuvre à partir d'une solution obtenue à partir d'un perfluoroalkylsilane de formule :
F₃C-(CF₂)ₘ-(CH₂)ₙ-Si(X)₃₋ₚ(R)ₚ
dans laquelle :
- m = 0 à 15, de préférence 5 à 9;
- n = 1 à 5, de préférence n = 2
- p = 0, 1 ou 2, de préférence 0 ou 1, de manière très préférée 0;
- R est un groupe alkyle ou un atome d'hydrogène ; et
- X est un groupement hydrolysable tel qu'un groupement halogénure ou un groupement alkoxy.

5. Procédé selon l'une des revendications 1 à 3, **caractérisé en ce que** l'étape de dépôt du revêtement hydrophobe est mise en oeuvre à partir d'une solution obtenue à partir d'un perfluoroalkylsilane du type perfluoropolyéthersilane.

6. Substrat verrier, céramique, vitrocéramique muni d'un revêtement hydrophobe susceptible d'être obtenu par la mise en oeuvre d'un procédé selon l'une des revendications 1 à 5 et comprenant :
- une couche de primage,
- une couche de revêtement hydrophobe sur ladite couche de primage, comprenant un composé fluoré, de préférence un alkylsilane fluoré, notamment un alkylsilane à extrémité perfluorée,
ledit substrat étant **caractérisé en ce que** la couche de primage est en SiOₓC_{y} dont la surface présente une rugosité RMS supérieure à 4 nm et a été activée par un traitement plasma d'un gaz choisi parmi les gaz nobles Ar, He, les gaz N₂, O₂ ou H₂O ou par un plasma d'un mélange d'au moins deux de ces gaz.

7. Substrat verrier selon la revendication 6, dans lequel l'épaisseur de la couche de primage SiOₓC_{y} est comprise entre 10 et 200 nm.

8. Substrat verrier selon l'une des revendications 6 ou 7, dans lequel la rugosité RMS de la couche de primage en SiOₓC_{y} est comprise entre 4 et 15 nm, notamment entre 6 et 15 nm.

9. Substrat verrier selon l'une des revendications 7 ou 8, dans lequel la rugosité RMS de la couche de primage en SiOₓC_{y} est constituée par des irrégularités à la surface de la couche de primage, par exemple des protubérances et/ou des creux, notamment sous la forme de bosses, dont la hauteur est comprise entre 5 et 100 nm et le nombre au moins de 10 par µm² de substrat recouvert.

10. Substrat verrier selon l'une des revendications 6 à 9, dans lequel le composé fluoré est un alkylsilane à extrémité perfluorée comprenant un groupement du type représenté par la formule générale:
F₃C-(CF₂)ₘ-(CH₂)ₙ-Si
avec :
- m = 0 à 15, de préférence 5 à 9;
- n = 1 à 5, de préférence n = 2.

11. Substrat verrier selon l'une des revendications 6 à 9, dans lequel le composé fluoré est un alkylsilane à extrémité perfluorée comprenant un groupement du type perfluoropolyéther.

12. Substrat verrier selon la revendication 11, dans lequel ledit alkylsilane comprend un groupement du type représenté par la formule générale: 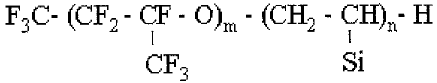 ou par la formule générale : 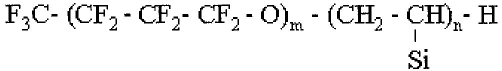 dans lesquelles
- m = 2 à 30
- n = 1 à 3, de préférence n = 1.

13. Substrat verrier selon l'une des revendications 6 à 12, dans lequel l'épaisseur de la couche de revêtement hydrophobe sur le primage est comprise entre 1 et 10 nm, de préférence entre 1 et 5 nm.

14. Vitrage monolithique, feuilleté ou multiple constitué par ou incorporant le substrat verrier selon l'une des revendications 6 à 13.

15. Utilisation du substrat verrier selon l'une des revendications 6 à 13 en tant que vitrage de véhicule de transport ou pour le bâtiment.

## Patentansprüche

1. Verfahren zum Erhalten einer hydrophoben Beschichtung auf einem Substrat, das von einem Glasmaterial, einer Keramik oder einer Glaskeramik gebildet ist, wobei das Verfahren **dadurch gekennzeichnet ist, dass** es umfasst:
a) einen ersten Schritt des Aufbringens, der darin besteht, auf das Substrat eine erste Primerschicht aus Siliciumoxicarbid SiOₓC_{y} aufzutragen, wobei der Primer eine Oberflächenrauigkeit RMS über 4 nm aufweist,
b) einen Schritt des Aktivierens der Primerschicht SiOₓC_{y} mit einem Plasma eines Gases, ausgewählt aus den Edelgasen Ar, He, den Gasen N₂, O₂ oder H₂O, oder mit einem Plasma eines Gemischs von mindestens zwei dieser Gase, vorzugsweise unter Bedingungen, die ihre Oberflächenrauigkeit nicht oder nicht spürbar verändern,
c) einen zweiten Schritt des Aufbringens auf die erste Schicht einer hydrophoben Beschichtung, umfassend mindestens eine Fluorverbindung, vorzugsweise ein fluoriertes Alkylsilan.

2. Verfahren nach Anspruch 1, wobei der der Schritt des Aktivierens der Primerschicht SiOₓC_{y} mittels eines Plasmas eines Gasgemischs erhalten wird, das H₂O und mindestens ein Gas, ausgewählt aus Ar, He oder N₂, enthält, wobei der Volumenprozentsatz von H₂O in dem Gemisch vorzugsweise unter oder gleich zirka 3 % beträgt.

3. Verfahren nach einem der Ansprüche 1 oder 2, wobei die Primerschicht SiOₓC_{y} mittels thermischem CVD unter Bedingungen aufgebracht wird, die erlauben, eine Oberflächenrauigkeit RMS zwischen 4 und 15 nm, insbesondere zwischen 6 und 15 nm, inklusive, zu erhalten.

4. Verfahren nach einem der vorangehenden Ansprüche, **dadurch gekennzeichnet, dass** der Schritt des Aufbringens der hydrophoben Beschichtung auf der Basis einer Lösung durchgeführt wird, die auf der Basis eines Perfluoralkylsilans der Formel:
F₃C-(CF₂)ₘ-(CH₂)ₙ-Si (X)₃₋ₚ(R)ₚ
erhalten wird, in der:
- m = 0 bis 15, vorzugsweise 5 bis 9;
- n = 1 bis 5, vorzugsweise n = 2;
- p = 0, 1 oder 2, vorzugsweise 0 oder 1, in sehr bevorzugter Weise 0;
- R eine Alkylgruppe oder ein Wasserstoffatom ist; und
- X eine hydrolysierbare Gruppe wie eine Halogenidgruppierung oder eine Alkoxygruppierung ist.

5. Verfahren nach einem der Ansprüche 1 bis 3, **dadurch gekennzeichnet, dass** der Schritt des Aufbringens der hydrophoben Beschichtung auf der Basis einer Lösung durchgeführt wird, die auf der Basis eines Perfluoralkylsilans des Typs Perfluorpolyethersilan erhalten wird.

6. Glas-, Keramik-, Glaskeramiksubstrat, ausgestattet mit einer hydrophoben Beschichtung, die durch die Durchführung eines Verfahrens nach einem der Ansprüche 1 bis 5 erhalten werden kann und umfasst:
- eine Primerschicht,
- eine hydrophobe Beschichtungsschicht auf der Primerschicht, umfassend eine Fluorverbindung, vorzugsweise ein fluoriertes Alkylsilan, insbesondere ein Alkylsilan mit perfluoriertem Ende,
wobei das Substrat **dadurch gekennzeichnet ist, dass** die Primerschicht aus SiOₓC_{y} ist, deren Oberfläche eine Rauigkeit RMS über 4 nm aufweist und durch eine Behandlung mit einem Plasma eines Gases, ausgewählt aus den Edelgasen Ar, He, den Gasen N₂, O₂ oder H₂O oder durch ein Plasma eines Gemischs von mindestens zwei dieser Gase aktiviert wurde.

7. Glassubstrat nach Anspruch 6, wobei die Stärke der Primerschicht SiOₓC_{y} zwischen 10 und 200 nm inklusive beträgt.

8. Glassubstrat nach einem der Ansprüche 6 oder 7, wobei die Rauigkeit RMS der Primerschicht aus SiOₓC_{y} zwischen 4 und 15 nm, insbesondere zwischen 6 und 15 nm, inklusive beträgt.

9. Glassubstrat nach einem der Ansprüche 7 oder 8, wobei die Rauigkeit RMS der Primerschicht aus SiOₓC_{y} von Unregelmäßigkeiten auf der Oberfläche der Primerschicht gebildet ist, beispielsweise Vorsprüngen und/oder Vertiefungen, insbesondere in Form von Höckern, deren Höhe zwischen 5 und 100 nm inklusive und deren Anzahl mindestens 10 je µm² beschichtetes Substrat beträgt.

10. Glassubstrat nach einem der Ansprüche 6 bis 9, wobei die Fluorverbindung ein Alkylsilan mit perfluoriertem Ende ist, umfassend eine Gruppierung des Typs, der durch die allgemeine Formel:
F₃C-(CF₂)ₘ-(CH₂)ₙ-Si
dargestellt ist mit:
- m = 0 bis 15, vorzugsweise 5 bis 9;
- n = 1 bis 5, vorzugsweise n = 2.

11. Glassubstrat nach einem der Ansprüche 6 bis 9, wobei die Fluorverbindung ein Alkylsilan mit perfluoriertem Ende ist, umfassend eine Gruppierung des Typs Perfluorpolyether.

12. Glassubstrat nach Anspruch 11, wobei das Alkylsilan eine Gruppierung des Typs umfasst, die durch die allgemeine Formel: 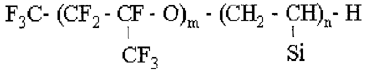 oder durch die allgemeine Formel: 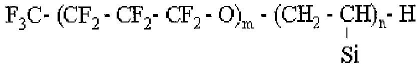 dargestellt ist, in denen
- m = 2 bis 30,
- n = 1 bis 3, vorzugsweise n = 1.

13. Glassubstrat nach einem der Ansprüche 6 bis 12, wobei die Stärke der hydrophoben Beschichtungsschicht auf dem Primer zwischen 1 und 10 nm, vorzugsweise zwischen 1 und 5 nm, inklusive beträgt.

14. Monolithische, Verbund- oder Mehrfachverglasung, gebildet von oder inkorporierend das Glassubstrat nach einem der Ansprüche 6 bis 13.

15. Verwendung des Glassubstrats nach einem der Ansprüche 6 bis 13 als Verglasung eines Transportfahrzeugs oder für das Bauwesen.

## Claims

1. A process for obtaining a hydrophobic coating on a substrate, preferably consisting of a glass material, a ceramic or a glass-ceramic, said process being **characterized in that** it comprises:
a) a first deposition step, consisting in applying a primer first layer of silicon oxycarbide SiOₓC_{y} on said substrate, said primer layer having an RMS surface roughness of greater than 4 nm;
b) an activation step, in which said SiOₓC_{y} primer layer is activated by a plasma of a gas chosen from the noble gases Ar or He and the gases N₂, O₂ or H₂O or by a plasma of a mixture of at least two of these gases, preferably under conditions that do not modify its surface roughness or not substantially so; and
c) a second deposition step, in which a hydrophobic coating comprising at least one fluorocompound, preferably a fluoroalkylsilane, is deposited on said first layer.

2. The process as claimed in claim 1, in which the step of activating said SiOₓC_{y} primer layer is carried out by means of a plasma of a gas mixture containing H₂O and at least one gas chosen from Ar, He and N₂, the volume percentage of H₂O in the mixture preferably being less than or equal to about 3%.

3. The process as claimed in either of claims 1 and 2, in which the SiOₓC_{y} primer layer is deposited by thermal CVD under conditions enabling an RMS surface roughness of between 4 and 15 nm, especially between 6 and 15 nm, to be obtained.

4. The process as claimed in one of the preceding claims, **characterized in that** the step of depositing the hydrophobic coating is carried out using a solution obtained from a perfluoroalkylsilane of formula:
F₃C-(CF₂)ₘ-(CH₂)ₙ-Si(X)₃₋ₚ(R)ₚ
in which:
- m = 0 to 15, preferably 5 to 9;
- n = 1 to 5, preferably n = 2;
- p = 0, 1 or 2, preferably 0 or 1, very preferably 0;
- R is an alkyl group or a hydrogen atom; and
- X is a hydrolysable group, such as a halide group or an alkoxy group.

5. The process as claimed in one of claims 1 to 3, **characterized in that** the step of depositing the hydrophobic coating is carried out using a solution obtained from a perfluoroalkylsilane of the perfluoropolyethersilane type.

6. A glass, ceramic or glass-ceramic substrate provided with a hydrophobic coating that can be obtained by implementing a process as claimed in one of claims 1 to 5 and comprising:
- an primer layer,
- a hydrophobic coating layer on said primer layer, comprising a fluorocompound, preferably a fluoroalkylsilane, especially a perfluoro-terminated alkylsilane,
said substrate being **characterized in that** the primer layer is made of SiOₓC_{y}, the surface of which has an RMS roughness of greater than 4 nm and has been activated by treatment with a plasma of a gas chosen from the noble gases Ar or He, and the gases N₂, O₂ or H₂O, or by a plasma of a mixture of at least two of these gases.

7. The glass substrate as claimed in claim 6, in which the thickness of the SiOₓC_{y} primer layer is between 10 and 200 nm.

8. The glass substrate as claimed in either of claims 6 and 7, in which the RMS roughness of the SiOₓC_{y} primer layer is between 4 and 15 nm, especially between 6 and 15 nm.

9. The glass substrate as claimed in either of claims 7 and 8, in which the RMS roughness of the SiOₓC_{y} primer layer is formed by irregularities on the surface of the primer layer, for example protuberances and/or hollows, especially in the form of bumps, the height of which is between 5 and 100 nm and the number of which is at least 10 per µm² of coated substrate.

10. The glass substrate as claimed in one of claims 6 to 9, in which the fluorocompound is a perfluoro-terminated alkylsilane comprising a group of the type represented by the general formula:
F₃C-(CF₂)ₘ-(CH₂)ₙ-Si
where:
- m = 0 to 15, preferably 5 to 9; and
- n = 1 to 5, preferably n = 2.

11. The glass substrate as claimed in one of claims 6 to 9, in which the fluorocompound is a perfluoro-terminated alkylsilane comprising a group of the perfluoropolyether type.

12. The glass substrate as claimed in claim 11, in which said alkylsilane comprises a group of the type represented by the general formula: 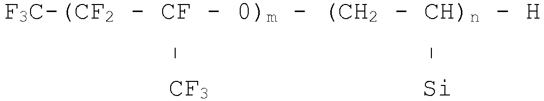 or by the general formula: 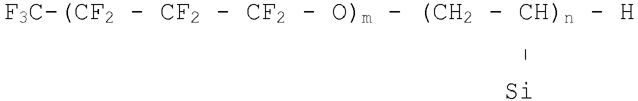 in which:
- m = 2 to 30; and
- n = 1 to 3, preferably n = 1.

13. The glass substrate as claimed in one of claims 6 to 12, in which the thickness of the hydrophobic coating layer on the primer layer is between 1 and 10 nm, preferably between 1 and 5 nm.

14. Monolithic, laminated or multiple glazing formed by or incorporating the glass substrate as claimed in one of claims 6 to 13.

15. The use of a glass substrate as claimed in one of claims 6 to 13 as glazing for transport vehicles or for buildings.
